# FASCICULE DE BREVET EUROPEEN

(11) **EP 2 528 727 B1**
(45) Date de publication et mention de la délivrance du brevet: **06.03.2019**
(21) Numéro de dépôt: 11704664.9
(22) Date de dépôt: 20.01.2011
(51) Int. Cl.: B29D 99/00, B29C 70/24, F01D 5/28, B29C 70/48, B29C 33/52, F01D 5/18, B29L 31/08, D03D 25/00

(54) **MÉTHODE DE FABRICATION D'UNE AUBE A CANAUX INTERNES EN COMPOSITE ET AUBE DE TURBOMACHINE EN COMPOSITE**
VERFAHREN ZUR HERSTELLUNG EINER SCHAUFEL MIT ZUSAMMENGESETZEN INNENKANÄLEN UND ZUSAMMENGESETZTE TURBINENMOTORSCHAUFEL
METHOD FOR MANUFACTURING A VANE HAVING COMPOSITE INTERNAL CHANNELS AND COMPOSITE TURBINE ENGINE VANE

(30) Priorité: 26.01.2010 FR 1050503
(43) Date de publication de la demande: 05.12.2012
(73) Titulaire: Safran Aircraft Engines, 75015 Paris (FR)
(72) Inventeur: COUPE, Dominique, F-33185 Le Haillan (FR); DAMBRINE, Bruno, Jacques, Gérard, F-77820 Le Chatelet En Brie (FR); MAHIEU, Jean-Noël, F-75014 Paris (FR)
(74) Mandataire: Desormiere, Pierre-Louis
(86) Numéro de dépôt international: PCT/FR2011/050107
(87) Numéro de publication internationale: WO 2011/092416

(56) Documents cités:
- FR-A1- 2 929 149
- JP-A- 8 207 078
- US-A1- 2003 059 577

## Description

### Arrière-plan de l'invention

L'invention concerne des aubes de turbomachine munies de canaux internes.

Afin de réduire le bruit et les turbulences en pied d'aube, il est connu de réaliser dans les aubes des canaux internes qui débouchent au voisinage du pied et du sommet de l'aube. Ces canaux internes forment ainsi un dispositif d'aspiration/soufflage qui prélève (aspire) une partie de l'air au niveau du pied de l'aube et l'évacue (souffle) au niveau du sommet de l'aube, ce qui permet d'absorber une partie de la couche limite à proximité du rotor.

Les aubes munies de tels dispositifs d'aspiration/soufflage sont généralement réalisées en matériau métallique, les canaux internes étant creusés dans la masse de l'aube.

Toutefois, l'usinage de canaux internes dans des aubes en matériau métallique est relativement délicat et ne peut être mis en oeuvre que pour des aubes ayant des géométries relativement simples. En particulier, il n'est pas possible d'usiner des canaux internes dans des aubes métalliques présentant une forme vrillée.

Afin d'obtenir des aubes plus légères, il est connu de réaliser des aubes en matériau composite, c'est-à-dire en réalisant des pièces de structure à renfort fibreux densifié par une matrice.

La technique généralement utilisée consiste à former un empilement de plis ou nappes unidirectionnels pré-imprégnés (drapage) que l'on place dans un moule en orientant différemment les plis successifs, avant compactage et polymérisation à l'autoclave.

Selon une autre technique plus récente et plus performante, l'aube est fabriquée par tissage tridimensionnel d'une préforme fibreuse et densification de la préforme par une matrice. Le document EP 1 526 285 décrit un procédé pour la fabrication d'une telle aube.

Toutefois, les aubes en matériau composite connues ne comportent pas de canaux internes. L'usinage de canaux internes dans une aube en matériau composite peut altérer les propriétés et la résistance mécanique de l'aube. En effet, le perçage d'un ou plusieurs canaux peut notamment conduire à l'endommagement, voire à la rupture, de certains fils du renfort et nuire, par conséquent, à la cohésion du renfort fibreux (interruption des chemins de transmission d'efforts formés par les fils du renfort).

Les aubes en matériau composite représentent toutefois une solution d'avenir notamment en raison de leur légèreté et de leurs excellentes propriétés mécaniques.

Le document US 2003/0595577 décrit des aubes en matériau composite munies de canaux internes.

Le document US 2003/0059577 décrit un procédé de fabrication d'une aube de turbomachine en matériau composite comprenant un renfort fibreux densifié par une matrice, le procédé comprenant: - la réalisation d'une ébauche fibreuse par tissage en deux dimensions d'une chaîne de fils et tiges fugaces et d'une trame de fils, les fils et tiges fugaces de la chaîne s'étendant dans la direction longitudinale de l'ébauche fibreuse correspondant à la direction longitudinale de l'aube à fabriquer, - la mise en forme de l'ébauche fibreuse pour obtenir une préforme de l'aube à réaliser, - la densification de la préforme par imprégnation de ladite préforme avec une composition liquide contenant un précurseur du matériau de la matrice pour obtenir une aube ayant un renfort fibreux constitué par ladite préforme et densifié par la matrice, - après la densification de la préforme, l'élimination des tiges à caractère fugace pour former un ou plusieurs canaux interne dans l'aube.

### Objet et résumé de l'invention

Il est donc souhaitable de pouvoir disposer d'aubes en matériau composite, pour des turbines ou compresseurs de turbomachines, qui comportent un ou plusieurs canaux internes tout en ayant les propriétés mécaniques requises. Il est également recherché de telles aubes ayant des formes relativement complexes telles qu'un vrillage.

A cet effet, selon la présente invention, il est proposé un procédé de fabrication d'une aube de turbomachine en matériau composite selon la revendication 1.

Ainsi, grâce au procédé de l'invention, il est possible de fabriquer des aubes en matériau composite comprenant des canaux internes avec préservation de l'intégrité mécanique de la structure de l'aube. En effet, selon le procédé de l'invention, les canaux sont formés sans altération de la continuité des fils du renfort adjacents aux canaux.

Par ailleurs, les fils à caractère fugace étant introduits dans le renfort avant la mise en forme de l'ébauche fibreuse, il est possible de réaliser des aubes de forme complexes, en particulier mise en forme par vrillage, avec des canaux internes.

Le matériau à caractère fugace peut être notamment, mais non exclusivement, choisi parmi au moins un des matériaux suivants:
- un matériau thermo-fusible tel que l'acétate de polyvinyle ou le polyéthylène,
- un matériau apte à être dissout par un solvant (eau, alcool, etc.) tel qu'un polymère soluble, par exemple un PVA (alcool polyvinylique).

L'ébauche
fibreuse est réalisée par tissage tridimensionnel, au moins des fils de la deuxième pluralité de fils liant des fils de la première pluralité des fils sur plusieurs couches. Le tissage tridimensionnel peut être un tissage multicouches avec une armure de type choisi parmi au moins une des armures suivantes: satin, multi-satin, multi-toile et interlock.

Les fils de la première pluralité de fils autres que les fils en matériau à caractère fugace et les fils de la deuxième pluralité de fils peuvent être notamment en matériau céramique ou carbone.

Le titre des fils en matériau à caractère fugace est déterminé en fonction de la taille des canaux internes à réaliser dans l'aube.

L'invention concerne également une aube de turbomachine en matériau composite selon la revendication 7.

L'aube peut présenter notamment une forme vrillée. Selon un aspect de l'invention, l'aube est en matériau composite à matrice organique. La pale de l'aube peut en outre avoir un profil d'épaisseur variable.

L'invention vise encore une turbomachine équipée d'une aube selon l'invention ou fabriquée selon le procédé tel que défini ci-avant.

### Brève description des dessins

L'invention sera mieux comprise à la description faite ci-après, à titre indicatif mais non limitatif, en référence aux dessins annexés sur lesquels :
- la figure 1 est une vue en perspective d'une aube de turbomachine en matériau composite comportant des canaux internes ;
- la figure 2 illustre de façon très schématique une ébauche fibreuse tissée tridimensionnelle destinée à la réalisation d'une préforme fibreuse pour une aube telle que celle illustrée par la figure 1 ;
- les figures 3 et 4 illustrent des étapes successives de réalisation d'une préforme fibreuse pour une aube telle qu'illustrée par la figure 1, à partir de l'ébauche fibreuse de la figure 2 ;
- la figure 5 est une vue en coupe montrant le profil, mis à plat, d'une aube telle que celle de la figure 2 ;
- la figure 6 est une vue en coupe d'un ensemble de couches de fils de chaîne permettant d'obtenir un profil tel que celui de la figure 5 ;
- les figures 7A et 7B sont des vues en coupe chaîne montrant un mode de tissage de l'ébauche fibreuse de la figure 2.

### Description détaillée de modes de réalisation

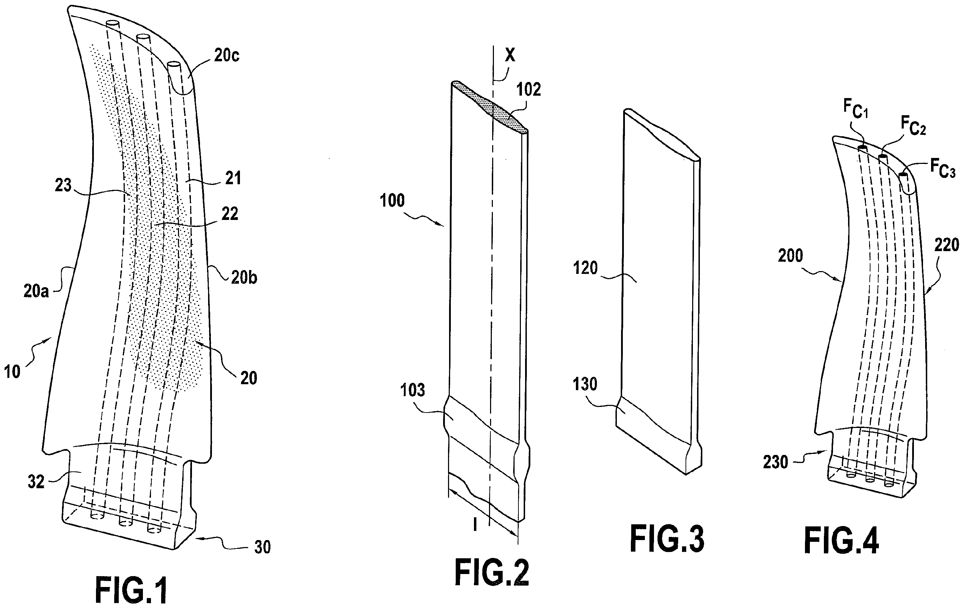

L'invention est applicable à différents types d'aubes de turbomachine, notamment des aubes de compresseur et de turbine de différents corps de turbines à gaz, par exemple une aube de roue mobile de turbine basse pression (BP), telle que celle illustrée par la figure 1.

L'aube 10 de la figure 1 comprend de façon en soi bien connue, une pale 20, un pied 30 formé par une partie de plus forte épaisseur, par exemple à section en forme de bulbe, prolongé par une échasse 32.

La pale 20 s'étend en direction longitudinale entre le pied 30 et son sommet 20c et présente en section transversale un profil incurvé d'épaisseur variable entre son bord d'attaque 20a et son bord de fuite 20b.

L'aube 10 est montée sur un rotor de turbine (non illustré) par engagement du pied 30 dans un logement de forme correspondante aménagé à la périphérie du rotor.

Conformément à l'invention, l'aube 10 comprend en outre trois canaux internes 21, 22 et 23 destinés à aspirer l'air au niveau du pied 30 et à le souffler au niveau du sommet 20c de la pale 20.

La figure 2 montre très schématiquement une ébauche fibreuse 100 à partir de laquelle une préforme fibreuse d'aube peut être mise en forme afin, après densification par une matrice et usinage éventuel, d'obtenir une aube en matériau composite telle que celle illustrée par la figure 1.

L'ébauche 100 est obtenue par tissage tridimensionnel ou tissage multicouche et est destinée, après mise en forme, à constituer une préforme de pale et pied d'aube.

L'ébauche 100 est réalisée sous forme d'une bande s'étendant de façon générale dans une direction X correspondant à la direction longitudinale de l'aube à réaliser. L'ébauche 100 présente une épaisseur variable déterminée en fonction de l'épaisseur de profil de la pale de l'aube à réaliser. Dans sa partie destinée à former une préforme de pied, l'ébauche fibreuse présente une surépaisseur 103 déterminée en fonction de l'épaisseur du pied de l'aube à réaliser. L'ébauche 100 a une largeur l choisie en fonction de la longueur du profil développé (à plat) de la pale et du pied de l'aube à réaliser.

Un mode de tissage tridimensionnel de l'ébauche fibreuse 100 sera maintenant décrit plus en détail.

Il est supposé que le tissage est réalisé avec des fils de chaîne s'étendant dans la direction longitudinale X de l'ébauche, à savoir la direction longitudinale de l'aube à réaliser, étant noté qu'un tissage avec des fils de trame dans cette direction est également possible.

La portion renflée 102 réalisant la variation d'épaisseur de l'ébauche 100 sur sa largeur est obtenue en utilisant des fils de chaîne de titre variable. On peut en variante ou en complément faire varier la contexture des fils de chaîne (nombre de fils par unité de longueur en sens trame), une contexture plus faible autorisant un amincissement plus important lors de la mise en forme de la préforme par moulage.

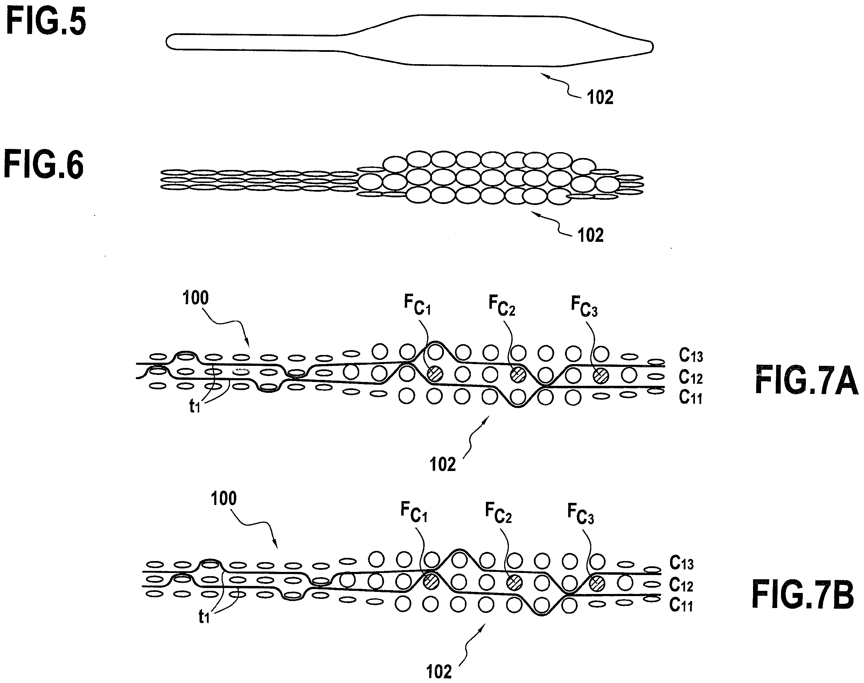

Ainsi, pour obtenir un profil de pale d'aube tel que représenté en projection à plat sur la figure 5, on peut utiliser 3 couches de fils de chaîne de titre et de contexture variables comme illustré par la figure 6.

Dans un exemple de réalisation, les fils utilisés, autres que ceux destinés à former des canaux internes comme expliqué ci-après, peuvent être des fils de carbone ou de carbure de silicium (SiC) ayant, par exemple, un titre (nombre de filaments) de 0,5K (500 filaments). Pour la formation de la variation d'épaisseur 102, des fils de titre plus important, par exemple 1K, sont utilisés. Si des fils de 1K ne sont pas disponibles, ils peuvent être obtenus par la réunion par guipage de deux fils de 0,5K.

Bien entendu, selon les titres de fils disponibles, différentes combinaisons de nombres de couches de fils et de variations de contexture et de titre pourront être adoptées pour le profil à obtenir.

Les figures 7A et 7B montrent, en coupe chaîne, deux plans successifs d'une armure pouvant être utilisée pour le tissage de l'ébauche fibreuse 100.

La bande de l'ébauche fibreuse 100 comprend un ensemble de couches de fils de chaîne, le nombre de couches étant ici par exemple égal à 3 (couches C₁₁, C₁₂, C₁₃). Les fils de chaîne sont liés par des fils de trame t₁ par tissage tridimensionnel.

Dans l'exemple illustré, le tissage est un tissage multicouches réalisé avec une armure de type satin, ou multi-satin. D'autres types de tissage tridimensionnel pourront être utilisés, par exemple un tissage multicouches à armure multi-toile ou un tissage à armure "interlock". Par tissage "interlock", on entend ici une armure de tissage dans laquelle chaque couche de fils de trame lie plusieurs couches de fils de chaîne avec tous les fils d'une même colonne de trame ayant le même mouvement dans le plan de l'armure.

Différents modes de tissage tridimensionnel sont notamment décrits dans le document WO 2006/136755.

Conformément à l'invention, trois fils de 1K F_{C1}, F_{C2} et F_{C3} de la couche C₁₂, c'est-à-dire la couche de fils de chaîne interne située entre les couches de fils de chaîne C₁₁ et C₁₃, sont en un matériau fugace ou fugitif, à savoir un matériau apte à être éliminé après la densification de la préforme, par exemple par volatilisation ou dissolution. Les fils F_{C1}, F_{C2} et F_{C3} peuvent avoir des titres différents selon la taille des canaux internes à réaliser dans l'aube.

Bien entendu, le nombre de couche de fils de chaîne peut être plus important selon l'épaisseur et les propriétés mécaniques envisagées. Quel que soit le nombre de couches de fils de chaîne de l'ébauche fibreuse (supérieure ou égale à 3), les fils à caractère fugace peuvent être introduits dans n'importe quelle couche de fils de chaîne située entre les deux couches de fils de chaîne superficielles destinées à former les peaux de l'aube.

Les fils F_{C1}, F_{C2} et F_{C3} peuvent être notamment formés avec les matériaux à caractère fugace suivants:
- un matériau thermo-fusible tel que l'acétate de polyvinyle ou le polyéthylène,
- un matériau apte à être dissout par un solvant (eau, alcool, etc.) tel qu'un polymère soluble, par exemple un PVA (alcool polyvinylique).

Dans le cas de la formation d'un renfort fibreux avec des fils en céramique et formation d'une matrice par imprégnation voie liquide, il est possible d'utiliser pour les fils à caractère fugace une silicone qui sera éliminée par volatilisation.

La surépaisseur 103 peut être obtenue en utilisant des fils de trame de plus gros titre et des couches supplémentaires de fils de trame, les trois fils de chaîne F_{C1}, F_{C2} et F_{C3} étant également présents dans la surépaisseur 103 au niveau d'une couche de fils chaîne interne.

Bien entendu, différentes combinaisons de nombres de couches de trame et de titres de fils de trame pourront être adoptées pour former la surépaisseur 103.

Les figures 3 et 4 montrent très schématiquement comment une préforme fibreuse ayant une forme proche de celle de l'aube à fabriquer peut être obtenue à partir de l'ébauche fibreuse 100.

Sur la figure 3, l'ébauche fibreuse 100 est coupée à une extrémité dans la surépaisseur 103 et à une autre extrémité pour avoir une bande 120 de longueur correspondant à la dimension longitudinale de l'aube à fabriquer avec une partie renflée 130 formée par une partie de la surépaisseur 103 et située à un emplacement correspondant à la position du pied de l'aube à fabriquer.

Une préforme fibreuse 200 de l'aube à fabriquer est ensuite obtenue par moulage avec déformation de la bande 102 pour reproduire le profil incurvé et vrillé de la pale de l'aube comme illustré sur la figure 4. On obtient ainsi une préforme avec une partie 220 de préforme de pale et une partie 230 de préforme de pied (avec préforme d'échasse).

Plus précisément, la préforme fibreuse 200 est obtenue par densification de l'ébauche fibreuse 100 par une matrice.

La densification de l'ébauche fibreuse consiste à combler la porosité de l'ébauche, dans tout ou partie du volume de celle-ci, par le matériau constitutif de la matrice.

La matrice du matériau composite constituant l'aube peut être obtenue de façon connue en soi suivant le procédé par voie liquide. Le procédé par voie liquide consiste à imprégner l'ébauche fibreuse par une composition liquide contenant un précurseur organique du matériau de la matrice. Le précurseur organique se présente habituellement sous forme d'un polymère, tel qu'une résine thermoplastique ou thermodurcissable, éventuellement dilué dans un solvant. L'ébauche est placée dans un moule pouvant être fermé de manière étanche avec un logement ayant la forme de la pièce finale moulée et pouvant notamment présenter une forme vrillée correspondant à la forme définitive de l'aube. Ensuite, on referme le moule et on injecte le précurseur liquide de matrice (par exemple une résine) dans tout le logement pour imprégner toute la partie fibreuse de la préforme.

La transformation du précurseur en matrice organique, à savoir sa polymérisation, est réalisée par traitement thermique, généralement par chauffage du moule, après élimination du solvant éventuel et réticulation du polymère, la préforme étant toujours maintenue dans le moule ayant une forme correspondant à celle de l'aube. La matrice organique peut être notamment obtenue à partir de résines époxydes, telle que la résine époxyde à hautes performances vendue sous la référence PR 520 par la société CYTEC, ou de précurseurs liquides de matrices carbone ou céramique. Dans ce cas, si les fils à caractère fugace F_{C1}, F_{C2} et F_{C3} sont en matériau thermo-fusible, le matériau sera choisi pour être fusible à une température supérieure à la température du traitement thermique de polymérisation qui se situe habituellement entre 180°C et 200°C environ.

La matrice peut être également une matrice céramique obtenue en imprégnant l'ébauche fibreuse avec une résine précurseur de céramique comme par exemple une résine polycarbosilane précurseur de carbure de silicium (SiC), ou une résine polysiloxane précurseur de SiCO, ou une résine polyborocarbosilazane précurseur de SiCNB, ou une résine polysilazane (SiCN).

Selon un aspect de l'invention, la densification de l'ébauche fibreuse peut être réalisée par le procédé bien connu de moulage par transfert dit RTM ("Resin Transfert Moulding"). Conformément au procédé RTM, on place l'ébauche fibreuse 100 dans un moule présentant la forme extérieure de l'aube. Une résine thermodurcissable est injectée dans l'espace interne du moule qui comprend l'ébauche fibreuse. Un gradient de pression est généralement établi dans cet espace interne entre l'endroit où est injecté la résine et les orifices d'évacuation de cette dernière afin de contrôler et d'optimiser l'imprégnation de l'ébauche par la résine.

La résine utilisée peut être, par exemple, une résine époxyde. Les résines adaptées pour les procédés RTM sont bien connues. Elles présentent de préférence une faible viscosité pour faciliter leur injection dans les fibres. Le choix de la classe de température et/ou la nature chimique de la résine est déterminé en fonction des sollicitations thermomécaniques auxquelles doit être soumise la pièce. Une fois la résine injectée dans tout le renfort, on procède à sa polymérisation par traitement thermique conformément au procédé RTM.

Après l'injection et la polymérisation, la pièce est démoulée. Au final, la pièce est détourée pour enlever l'excès de résine et les chanfreins sont usinés. Aucun autre usinage n'est nécessaire puisque, la pièce étant moulée, elle respecte les cotes exigées.

Une fois la densification achevée, on procède à l'élimination des fils de chaîne F_{C1}, F_{C2} et F_{C3}. Le traitement utilisé pour éliminer ces fils est fonction du matériau à caractère fugace constitutif des fils F_{C1}, F_{C2} et F_{C3}. Le traitement d'élimination peut, par exemple, correspondre à un traitement thermique réalisé à une température supérieure ou égale à la température de volatilisation du matériau ou à un trempage de la préforme dans une solution permettant de dissoudre le matériau des fils à éliminer.

Après l'élimination des fils F_{C1}, F_{C2} et F_{C3}, on obtient l'aube 10 de la figure 1, c'est-à-dire une aube présentant une forme vrillée et comportant trois canaux internes 21 à 22 constituant un dispositif d'aspiration/soufflage lorsque que l'aube est montée sur un rotor de turbomachine (non représenté).

## Revendications

1. Procédé de fabrication d'une aube (10) de turbomachine en matériau composite comprenant un renfort fibreux densifié par une matrice, le procédé comprenant :
- réalisation d'une ébauche fibreuse (100) par tissage d'une première pluralité de fils et d'une deuxième pluralité de fils, les fils de ladite première pluralité de fils étant disposés en couches successives (C₁₁, C₁₂, C₁₃) et s'étendant dans la direction longitudinale de l'ébauche fibreuse correspondant à la direction longitudinale de l'aube (10) à fabriquer,
- la mise en forme de l'ébauche fibreuse (100) pour obtenir une préforme (200) de l'aube (10) à réaliser,
- la densification de la préforme (200) par imprégnation de ladite préforme avec une composition liquide contenant un précurseur du matériau de la matrice pour obtenir une aube (10) ayant un renfort fibreux constitué par ladite préforme et densifié par la matrice,
- l'ébauche fibreuse (200) étant réalisée par tissage tridimensionnel, au moins des fils de la deuxième pluralité de fils liant des fils de la première pluralité des fils sur plusieurs couches, et au moins une couche de fils (C₁₂) de la première pluralité de fils située dans la partie interne de l'ébauche fibreuse comportant un ou plusieurs fils en matériau à caractère fugace (F_{C1}, F_{C2} et F_{C3}) et le procédé comprenant
en outre, après la densification de la préforme (200), l'élimination du ou des fils en matériau à caractère fugace (F_{C1}, F_{C2} et F_{C3}) pour former un ou plusieurs canaux interne (21, 22, 23) dans l'aube.

2. Procédé selon la revendication 1, **caractérisé en ce que** le matériau à caractère fugace est choisi parmi au moins un des matériaux suivants:
- un matériau thermo-fusible,
- un matériau apte à être dissout par un solvant.

3. Procédé selon la revendication 2, **caractérisé en ce que** l'élimination des fils en matériau à caractère fugace est réalisée par traitement thermique ou par application d'un solvant.

4. Procédé selon la revendication 1, **caractérisé en ce que** le tissage tridimensionnel est un tissage multicouches avec une armure de type choisi parmi au moins une des armures suivantes: satin, multi-satin, multi-toile et interlock.

5. Procédé selon l'une quelconque des revendications 1 à 4, **caractérisé en ce que** les fils de la première pluralité de fils autres que les fils en matériau à caractère fugace et les fils de la deuxième pluralité de fils sont en matériau céramique ou carbone.

6. Procédé selon l'une quelconque des revendications 1 à 5, **caractérisé en ce que** le titre des fils en matériau à caractère fugace (F_{C1}, F_{C2} et F_{C3}) est déterminé en fonction de la taille des canaux internes à réaliser dans l'aube.

7. Aube (10) de turbomachine en matériau composite comprenant un renfort fibreux (200) obtenu par tissage d'une première pluralité de fils et d'une deuxième pluralité de fils, les fils de ladite première pluralité de fils étant disposés en couches successives (C₁₁, C₁₂, C₁₃) et s'étendant dans la direction longitudinale de l'ébauche fibreuse (200) correspondant à la direction longitudinale de l'aube (10), ledit renfort étant densifié par une matrice,
**caractérisée en ce que** le renfort fibreux (200) est obtenu par tissage tridimensionnel, au moins des fils de la deuxième pluralité de fils liant des fils de la première pluralité des fils sur plusieurs couches, et **en ce que** l'aube comprend un ou plusieurs canaux internes (21, 22, 23) s'étendant dans la direction longitudinale de ladite aube.

8. Aube selon la revendication 7, **caractérisée en ce que** le tissage tridimensionnel est un tissage multicouches avec une armure de type choisi parmi au moins une des armures suivantes: satin, multi-satin, multi-toile et interlock ou multicouches.

9. Aube selon l'une quelconque des revendications 7 ou 8, **caractérisée en ce que** les fils de la première pluralité de fils et les fils de la deuxième pluralité de fils sont en matériau céramique ou carbone.

10. Aube selon l'une quelconque des revendications 7 à 9, **caractérisée en ce qu'**elle présente une forme vrillée.

11. Aube selon l'une quelconque des revendications 7 à 10, **caractérisée en ce qu'**elle est en matériau composite à matrice organique.

12. Aube selon l'une quelconque des revendications 7 à 11, **caractérisée en ce que** la pale de l'aube a un profil d'épaisseur variable.

13. Turbomachine équipée d'une aube selon l'une quelconque des revendications 7 à 12 ou fabriquée selon le procédé de l'une quelconque des revendications 1 à 6.

## Patentansprüche

1. Verfahren zur Herstellung einer Schaufel (10) einer Turbomaschine aus Verbundwerkstoff mit einer durch eine Matrix verdichteten Faserverstärkung, wobei das Verfahren umfasst:
- Herstellen eines Faserrohlings (100) durch Weben einer ersten Vielzahl von Fäden und einer zweiten Vielzahl von Fäden, wobei die Fäden der ersten Vielzahl von Fäden in aufeinanderfolgenden Lagen (C₁₁, C₁₂, C₁₃) angeordnet sind und sich in der Längsrichtung des Faserrohlings, welche der Längsrichtung der herzustellenden Schaufel (10) entspricht, erstrecken,
- das Informbringen des Faserrohlings (100), um einen Vorformling (200) der herzustellenden Schaufel (10) zu erhalten,
- das Verdichten des Vorformlings (200) durch Imprägnieren des Vorformlings mit einer flüssigen Zusammensetzung, die einen Vorläufer des Materials der Matrix enthält, um eine Schaufel (10) mit einer Faserverstärkung zu erhalten, die durch den Vorformling gebildet und durch die Matrix verdichtet ist,
wobei der Faserrohling (200) durch dreidimensionales Weben hergestellt wird, wobei wenigstens Fäden der zweiten Vielzahl von Fäden Fäden der ersten Vielzahl von Fäden über mehrere Lagen verbinden, und wobei wenigstens eine Fadenlage (C₁₂) der ersten Vielzahl von Fäden, die sich im inneren Teil des Faserrohlings befindet, einen oder mehrere Fäden aus Material mit flüchtigem Charakter (F_{C1}, F_{C2} und F_{C3}) umfasst, und wobei das Verfahren ferner nach dem Verdichten des Vorformlings (200) das Entfernen des oder der Fäden aus Material mit flüchtigem Charakter (F_{C1}, F_{C2} und F_{C3}) umfasst, um einen oder mehrere Innenkanäle (21, 22, 23) in der Schaufel zu bilden.

2. Verfahren nach Anspruch 1, **dadurch gekennzeichnet, dass** das Material mit flüchtigem Charakter aus wenigstens einem der folgenden Materialien ausgewählt ist:
- einem warmschmelzenden Material,
- einem Material, das geeignet ist, durch ein Lösungsmittel gelöst zu werden.

3. Verfahren nach Anspruch 2, **dadurch gekennzeichnet, dass** das Entfernen der Fäden aus Material mit flüchtigem Charakter durch Wärmebehandlung oder durch Aufbringen eines Lösungsmittels erfolgt.

4. Verfahren nach Anspruch 1, **dadurch gekennzeichnet, dass** das dreidimensionale Weben ein Mehrlagenweben mit einer Bindung eines Typs ist, der aus wenigstens einer der folgenden Bindungen ausgewählt ist: Satin-, Multisatin-, Multileinwand- und Interlock-.

5. Verfahren nach einem der Ansprüche 1 bis 4, **dadurch gekennzeichnet, dass** die Fäden der ersten Vielzahl von Fäden, außer den Fäden aus Material mit flüchtigem Charakter, und die Fäden der zweiten Vielzahl von Fäden aus Keramik- oder Kohlenstoffmaterial bestehen.

6. Verfahren nach einem der Ansprüche 1 bis 5, **dadurch gekennzeichnet, dass** die Feinheit der Fäden aus Material mit flüchtigem Charakter (F_{C1}, F_{C2} und F_{C3}) in Abhängigkeit von der Größe der in der Schaufel auszubildenden Innenkanäle bestimmt wird.

7. Schaufel (10) einer Turbomaschine aus Verbundwerkstoff, umfassend eine Faserverstärkung (200), welche durch Weben einer ersten Vielzahl von Fäden und einer zweiten Vielzahl von Fäden erhalten wird, wobei die Fäden der ersten Vielzahl von Fäden in aufeinanderfolgenden Lagen (C₁₁, C₁₂, C₁₃) angeordnet sind und sich in der Längsrichtung des Faserrohlings (200), welche der Längsrichtung der Schaufel (10) entspricht, erstrecken, wobei die Verstärkung durch eine Matrix verdichtet ist,
**dadurch gekennzeichnet, dass** die Faserverstärkung (200) durch dreidimensionales Weben erhalten wird, wobei wenigstens Fäden der zweiten Vielzahl von Fäden Fäden der ersten Vielzahl von Fäden über mehrere Lagen verbinden, und dass die Schaufel einen oder mehrere Innenkanäle (21, 22, 23), die sich in der Längsrichtung der Schaufel erstrecken, umfasst.

8. Schaufel nach Anspruch 7, **dadurch gekennzeichnet, dass** das dreidimensionale Weben ein Mehrlagenweben mit einer Bindung eines Typs ist, der aus wenigstens einer der folgenden Bindungen ausgewählt ist: Satin-, Multisatin-, Multileinwand- und Interlock- oder Mehrlagen-.

9. Schaufel nach einem der Ansprüche 7 oder 8, **dadurch gekennzeichnet, dass** die Fäden der ersten Vielzahl von Fäden und die Fäden der zweiten Vielzahl von Fäden aus Keramik- oder Kohlenstoffmaterial bestehen.

10. Schaufel nach einem der Ansprüche 7 bis 9, **dadurch gekennzeichnet, dass** sie eine gewundene Form aufweist.

11. Schaufel nach einem der Ansprüche 7 bis 10, **dadurch gekennzeichnet, dass** sie aus Verbundwerkstoff mit organischer Matrix besteht.

12. Schaufel nach einem der Ansprüche 7 bis 11, **dadurch gekennzeichnet, dass** das Blatt der Schaufel ein Profil mit variabler Dicke aufweist.

13. Turbomaschine, die mit einer Schaufel nach einem der Ansprüche 7 bis 12 oder hergestellt nach dem Verfahren von einem der Ansprüche 1 bis 6 ausgerüstet ist.

## Claims

1. A method of fabricating a turbine engine blade (10) out of composite material comprising fiber reinforcement densified by a matrix, the method comprising:
• making a fiber blank (100) by weaving a first plurality of yarns with a second plurality of yarns, the yarns of said first plurality being arranged in successive layers (C₁₁, C₁₂, C₁₃) and extending in the longitudinal direction of the fiber blank corresponding to the longitudinal direction of the blade (10) to be made;
• shaping the fiber blank (100) to obtain a preform (200) of the blade (10) to be made; and
• densifying the preform (200) by impregnating said preform with a liquid composition containing a precursor for the material of the matrix in order to obtain a blade (10) having fiber reinforcement constituted by said preform and densified by the matrix;
the fiber blank (200) being made by three-dimensionally weaving at least yarns of the second plurality of yarns linking together yarns of the first plurality of yarns over a plurality of layers, and at least one layer of yarns (C₁₂) in the first plurality of yarns situated in the internal portion of the fiber blank including one or more yarns (F_{C1}, F_{C2}, and F_{C3}) of sacrificial material, and the method further comprising, after the preform (200) has been densified, eliminating the yarn(s) (F_{C1}, F_{C2}, and F_{C3}) of sacrificial material in order to form one or more internal channels (21, 22, 23) in the blade.

2. A method according to claim 1, **characterized in that** the sacrificial material is selected from at least one of the following materials:
• a hot-melt material; and
• a material suitable for being dissolved by a solvent.

3. A method according to claim 2, **characterized in that** the yarns of sacrificial material are eliminated by heat treatment or by applying a solvent.

4. A method according to claim 1, **characterized in that** the three-dimensional weaving is multi-layer weaving with a weave of a type selected from at least one of the following weaves: satin, multi-satin, multi-plain, and interlock.

5. A method according to any one of claims 1 to 4, **characterized in that** the yarns of the first plurality of yarns other than the yarns made of sacrificial material, and the yarns of the second plurality of yarns are made of ceramic or carbon material.

6. A method according to any one of claims 1 to 5, **characterized in that** the weights of the yarns (F_{C1}, F_{C2}, and F_{C3}) of sacrificial material is determined as a function of the sizes of the internal channels to be made in the blade.

7. A turbine engine blade (10) made of composite material comprising fiber reinforcement (200) obtained by weaving a first plurality of yarns with a second plurality of yarns, the yarns of said first plurality of yarns being arranged in successive layers (C₁₁, C₁₂, C₁₃) and extending in the longitudinal direction of the fiber blank (200) corresponding to the longitudinal direction of the blade (10), said reinforcement being densified by a matrix, and the blade being **characterized in that** the fiber reinforcement (200) is obtained by three-dimensionally weaving at least yarns of the second plurality of yarns linking together yarns of the first plurality of yarns over a plurality of layers, and **in that** it includes one or more internal channels (21, 22, 23) extending in the longitudinal direction of said blade.

8. A blade according to claim 7, **characterized in that** the three-dimensional weaving is multi-layer weaving using a weave of a type selected from at least one of the following weaves: satin, multi-satin, multi-plain, and interlock, or else a multi-layer weave.

9. A blade according to any one of claims 7 or 8, **characterized in that** the yarns of the first plurality of yarns and the yarns of the second plurality of yarns are made of ceramic or carbon material.

10. A blade according to any one of claims 7 to 9, **characterized in that** it presents a twisted shape.

11. A blade according to any one of claims 7 to 10, **characterized in that** it is made of an organic matrix composite material.

12. A blade according to any one of claims 7 to 11, **characterized in that** the airfoil of the blade has a profile of varying thickness.

13. A turbine engine fitted with a blade according to any one of claims 7 to 12 or fabricated by the method of any one of claims 1 to 6.
